# EUROPÄISCHE PATENTANMELDUNG

(11) **EP 4 140 289 A1**
(43) Veröffentlichungstag der Anmeldung: **01.03.2023**
(21) Anmeldenummer: 22173933.7
(22) Anmeldetag: 18.05.2022
(51) Int. Cl.: A01D 90/04, A01F 15/10

(54) **LANDWIRTSCHAFTLICHE BALLENPRESSE**

(30) Priorität: 23.08.2021 DE 102021121746
(71) Anmelder: Usines CLAAS France S.A.S, 57140 St. Rémy / Woippy (FR)
(72) Erfinder: Meaux, Fabien, 57270 Uckange (FR); Rongvaux, Laurent, 54800 Tronville (FR)
(74) Vertreter: CLAAS Gruppe

(57) **Zusammenfassung**

Die Erfindung betrifft eine landwirtschaftliche Ballenpresse (1), insbesondere in Form einer Rundballenpresse (1), zur Herstellung von Erntegutballen aus halmartigem Erntegut (2), umfassend ein Aufnahmeorgan (3) zur Aufnahme von Erntegut (2) von einem Untergrund (4), ein Häckselorgan (5) zur Zerkleinerung des Ernteguts (2), und ein Verdichtungsorgan (6) zur Verdichtung des zerkleinerten Ernteguts (2) zu einem Erntegutballen. Hierbei weist das Häckselorgan (5) einen Gutförderboden (7), einen drehantreibbaren Häckselrotor (8) sowie eine Vielzahl von zumindest zum Teil über den Gutförderboden (7) hinaus vorstehenden Gegenmessern (9) auf. Weiterhin ist vorgesehen, dass das aufgenommene Erntegut in eine Gutflussrichtung durch das Häckselorgan (5) zu dem Verdichtungsorgan (6) förderbar ist.

Erfindungsgemäß ist vorgesehen, dass das Häckselorgan (5) eine Messereinheit (10) aufweist, die einen die Gegenmesser (9) tragenden Messertragrahmen (11) und einen mit Gleitschienen (12) ausgestatteten Gleitrahmen (13) umfasst. Hierbei ist der Messertragrahmen (11) derart an dem Gleitrahmen (13) gelagert, dass der Messertragrahmen (11) mittels der Gleitschienen (12) des Gleitrahmens (13) in eine Querrichtung der Ballenpresse (1) gerichtet translatorisch aus der übrigen Ballenpresse (1) heraus bewegbar ist. Außerdem ist die Messereinheit (10) unterhalb des Gutförderbodens (7) positioniert und der Messertragrahmen (11) und der Gleitrahmen (13) sind mittels eines Verriegelungselements (14) miteinander verbindbar oder verbunden.

## Beschreibung

Die Erfindung betrifft eine landwirtschaftliche Ballenpresse gemäß dem Oberbegriff des Anspruchs 1.

Eine derartige Ballenpresse, insbesondere in Form einer Rundballenpresse, zur Herstellung von Erntegutballen aus halmartigem Erntegut, umfasst ein Aufnahmeorgan zur Aufnahme von Erntegut von einem Untergrund, ein Häckselorgan zur Zerkleinerung des Ernteguts und ein Verdichtungsorgan zur Verdichtung des zerkleinerten Ernteguts zu einem Erntegutballen. Hierbei weist das Häckselorgan einen Gutförderboden, einen drehantreibbaren Häckselrotor sowie eine Vielzahl von zumindest zum Teil über den Gutförderboden hinaus vorstehenden Gegenmessern auf, wobei das aufgenommene Erntegut in eine Gutflussrichtung durch das Häckselorgan zu dem Verdichtungsorgan förderbar ist. Mit anderen Worten wird das Erntegut von dem Untergrund, beispielsweise einem zu bestellenden Feld, mittels des Aufnahmeorgans, das in der Technik auch als Pick-up bezeichnet wird, aufgenommen, sodann von dem Häckselorgan zerkleinert und abschließend von dem Verdichtungsorgan zu dem Erntegutballen verdichtet, der auf dem Feld abgelegt werden kann.

Die Zerkleinerung des Ernteguts mittels des Häckselorgans erfolgt wird in aller Regel mittels des Zusammenwirkens von Messern, die an dem Häckselrotor angeordnet sein können, mit den Gegenmessern erreicht. Hierzu wird das aufgenommene Erntegut über den Gutförderboden gefördert, aus dem die Gegenmesser vorstehen und somit in den Gutstrom des Ernteguts einragen. Der Häckselrotor ist oberhalb des Gutförderbodens angeordnet und begrenzt gemeinsam mit dem Gutförderboden einen Spalt, durch den der Gutstrom im Betrieb der Ballenpresse strömt und dadurch das Häckselorgan passiert. Aufgrund der Rotation des Häckselrotors mitsamt dessen Messern wird das Erntegut mittels Zusammenwirkens der Messer des Häckselrotors mit den am Gutförderboden angeordneten, feststehenden Gegenmessern zerkleinert. Hierdurch sind insbesondere die Gegenmesser hohen Kräften ausgesetzt, sodass diese in regelmäßigen Abständen gewartet beziehungsweise ausgetauscht werden müssen. Außerdem kommt es immer wieder vor, dass der Förderkanal, insbesondere an der Stelle der Gegenmesser, verstopft, beispielsweise aufgrund zu hoher Mengen an Erntegut oder nicht beziehungsweise schwierig zerkleinerbarer Fremdkörper, beispielsweise Ästen und/oder Steinen. Mit anderen Worten ist es unvermeidbar, dass das Aufnahmeorgan neben Erntegut immer wieder auch andere auf dem Untergrund liegende Gegenstände aufnimmt. Diese können sich in den Gegenmesser verhaken und/oder ein Zerkleinern so stark behindern beziehungsweise verlangsamen, dass es zu einem Stau des Ernteguts an den Gegenmessern kommt. Entsprechend ist es regelmäßig erforderlich, solche Staus aufzulösen und die Gegenmesser zu tauschen, sobald diese verschlissen sind.

Ballenpressen der eingangs beschriebenen Art sind dem Stand der Technik in vielfältiger Ausgestaltung als bekannt zu entnehmen. Beispielsweise ist der DE 198 41 598 A1 eine Fördervorrichtung für landwirtschaftliche Erntefahrzeuge, insbesondere Ballenpressen, als bekannt zu entnehmen. Die Fördervorrichtung umfasst eine Pick-up, insbesondere in Form einer Trommel, und einen sich daran anschließenden Förderkanal. Weiterhin weist die Fördervorrichtung einen Förderrotor auf, welcher oberhalb von dem Förderkanal angeordnet ist, sodass dieser nach oben durch den Förderrotor begrenzt ist. Außerdem ist unterhalb von dem Förderkanal ein Förderkanalboden vorgesehen, der eine Vielzahl von Schneidmessern aufweist und bei Überlastung automatisch absenkbar ist sowie nach Entlastung in seine Normalstellung zurückschwenkt. Es kann beispielsweise vorgesehen sein, dass der Förderkanalboden eine Blechplatte umfasst, welche zueinander beabstandete Langlochschlitze aufweist, durch welche die Schneidmesser hindurchschwenken können. Durch die vorgenannte Ausgestaltung sollen sowohl Blockierungen des Förderrotors als auch Überlastungen des Förderrotors beziehungsweise der Schneidmesser vermieden werden.

Außerdem ist der EP 3 053 430 A1 eine Ballenpresse mit einer absenkbaren Bodeneinrichtung beziehungsweise einer absenkbaren Messervorrichtung als bekannt zu entnehmen. Hierbei weist die Ballenpresse ein Rahmengestell auf, an dem eine Pick-up und ein Vorverdichtungsorgan angeordnet sind, wobei das Vorverdichtungsorgan in Fahrzeuglängsrichtung hinter der Pick-up angeordnet ist. Außerdem weist die Ballenpresse ein Beschickungsorgan auf, das ebenfalls an dem Rahmengestell angeordnet ist, wobei mittels dem Beschickungsorgan Erntegut in einem Förderkanal zwischen Pick-up und Vorverdichtungsorgan transportiert werden kann. Außerdem ist eine Bodeneinrichtung vorgesehen, die zumindest teilweise unterhalb des Beschickungsorgans und mittels eines Gelenkes schwenkbar an dem Rahmengestell angeordnet ist, sodass das Beschickungsorgan zwischen einer angehobenen Position und einer abgesenkten Position verschwenkbar ist. Des Weiteren weist die Ballenpresse die Messervorrichtung auf, die an der Bodeneinrichtung angeordnet ist und mindestens ein Messer aufweist, das zumindest teilweise in den Förderkanal hineinragt. Es ist vorgesehen, dass das Gelenk - in Fahrzeuglängsrichtung betrachtet - hinter der Pick-up und dem Beschickungsorgan angeordnet ist, sodass die Bodeneinrichtung und die Messervorrichtung von der angehobenen Position in die abgesenkte Position - in Fahrzeughochrichtung betrachtet - nach unten und - in Fahrzeuglängsrichtung betrachtet - nach hinten verschwenkbar sind.

Es ist außerdem als bekannt zu entnehmen, dass die Ballenpresse einen ersten und einen zweiten Gleitrahmen, insbesondere zumindest im Wesentlichen in Form einer Schiene, aufweist, wobei diese an dem Rahmengestell und zumindest im Wesentlichen quer zu dem Förderkanal angeordnet sind. Hierbei ist vorgesehen, dass die Bodeneinrichtung und die Messervorrichtung fahrbar an beziehungsweise auf dem Gleitrahmen bewegbar sind. In diesem Zusammenhang können die Bodeneinrichtung und die Messervorrichtung insbesondere zwischen einer ersten Position, in der beide mit dem Förderkanal zumindest im Wesentlichen fluchten, und einer zweiten Position, in der beide - in Fahrzeuglängsrichtung betrachtet - quer beziehungsweise seitlich zu dem Förderkanal und somit seitlich zu der Ballenpresse in einen lateralen Abstand zu dieser bewegt werden.

Nachteilig bei dem vorgenannten Stand der Technik ist, dass die Messervorrichtung nur schwierig und nicht sicher zugänglich ist. Außerdem sind derartige, ausziehbare Messervorrichtungen nur für große Ballenpressen geeignet und somit aufgrund des großen benötigten Bauraums insbesondere für kleinere Ballenpressen nicht geeignet.

Es ist Aufgabe der vorliegenden Erfindung, die Nachteile des Stands der Technik zu beseitigen und eine landwirtschaftliche Ballenpresse bereitzustellen, die besonders sicher und einfach gewartet werden kann.

Die vorgenannte Aufgabe wird durch eine landwirtschaftliche Ballenpresse mit den Merkmalen des Anspruchs 1 gelöst. Vorteilhafte Ausgestaltungen sind Gegenstand der Unteransprüche.

Erfindungsgemäß ist vorgesehen, dass das Häckselorgan eine Messereinheit aufweist, die einen die Gegenmesser tragenden Messertragrahmen und einen mit Gleitschienen ausgestatteten Gleitrahmen umfasst. Hierbei ist der Messertragrahmen derart an dem Gleitrahmen gelagert, dass der Messertragrahmen mittels der Gleitschienen des Gleitrahmens in eine Querrichtung der Ballenpresse gerichtet translatorisch aus der übrigen Ballenpresse heraus bewegbar ist. Außerdem ist vorgesehen, dass die Messereinheit unterhalb des Gutförderbodens positioniert und der Messertragrahmen sowie der Gleitrahmen mittels eines Verriegelungselements miteinander verbindbar oder verbunden sind.

Die erfindungsgemäße Quaderballenpresse hat viele Vorteile und unterscheidet sich von dem Stand der Technik grundlegend.

Um die Gegenmesser besonders einfach zugänglich zu machen, beispielsweise, um diese zu warten oder auszutauschen, können diese erfindungsgemäß seitlich aus der Ballenpresse herausgezogen werden. Dazu sind die Gegenmesser auf beziehungsweise an dem Messertragrahmen befestigbar beziehungsweise befestigt. Außerdem weist die Messereinheit den Gleitrahmen auf, der vorzugsweise mindestens eine, weiter vorzugsweise mehrere Gleitschienen umfasst. Dadurch, dass der Messertragrahmen an dem Gleitrahmen gelagert und somit zumindest mittelbar mittels der Gleitschienen bewegbar ist, kann der Messertragrahmen mitsamt der Gegenmesser seitlich aus der Ballenpresse herausgezogen werden. Auf diese Weise sind die Gegenmesser für Wartungsarbeiten zugänglich gemacht. Dies schließt insbesondere einen Tausch der verschlissenen Gegenmesser gegen neue Gegenmesser ein.

Gemäß einer besonders vorteilhaften Ausgestaltung der Erfindung ist vorgesehen, dass die Messereinheit, vorzugsweise gemeinsam mit dem Gutförderboden, gegenüber einem Gehäuse der Ballenpresse um eine sich quer zu der Ballenpresse erstreckende Rückschwenkachse aktiv oder passiv verschwenkbar ist. Die Rückschwenkachse ist - in Gutflussrichtung betrachtet - in einem Bereich hinter dem Häckselrotor bzw. einer Rotationsachse desselben angeordnet, sodass die Messereinheit in einem Bereich vor dem Häckselrotor ("vorderer Bereich") absenkbar ist. Mit anderen Worten kann zumindest die Messereinheit, insbesondere zusammen mit dem Gutförderboden, relativ zu der Ballenpresse derart aktiv oder passiv verschwenkt werden, dass die Messereinheit in dem vorderen Bereich vor dem Häckselrotor abgesenkt wird. Hierdurch wird der Spalt zwischen Messereinheit bzw. Gutförderboden und Häckselrotor aufgeweitet. Hierdurch ist es besonders einfach möglich, einen Stau im Häckselorgan, beispielsweise durch einen zu großen Massenstrom des Ernteguts oder Fremdkörper, zu beheben. Insbesondere kann bei der Öffnung des Häckselorgans im vorderen Bereich vermieden werden, dass bei einer solche Behebung eines Staus viel Erntegut aus dem Häckselorgan auf den Untergrund fällt. Hierdurch ergibt sich der Vorteil, dass Wartungsarbeiten besonders einfach und zeiteffizient durchgeführt werden können.

Die passive Verschwenkung der Messereinheit, die nicht aktiv bzw. vorsätzlich angetrieben wird, kann während des Betriebs der Ballenpresse sinnvoll sein, beispielsweise um bei einer Änderung des Massenstroms des aufgenommenen Ernteguts eine Verstopfung bzw. einen Stau zu verhindern. Der größere Massenstrom führt dazu, dass auf die Messereinheit und vorzugsweise den Gutförderboden wirkende Kräfte die Verschwenkung der Messereinheit und ggf. des Gutförderbodens "antreiben" und es zu der beschriebenen Aufweitung des Spalts kommt. Die Aufweitung des Spalts trägt dann dazu bei, dass mehr Erntegut an dem Häckselorgan verarbeitet werden kann, wodurch eine Verstopfung vermieden ist. Durch diese Beweglichkeit der Messereinheit im vorderen Bereich des Häckselorgans, mithin relativ zu dem Förderkanal beziehungsweise zu dem Gutförderboden, können unvermeidliche Stöße, die beispielsweise durch Überfahren von Mulden und/oder Hügeln auf dem Untergrund hervorgerufen werden, besonders gut absorbiert werden. Hierdurch ergibt sich der Vorteil, dass die Ballenpresse besonders robust ist und besonders verschleißarm betrieben werden kann.

Auch ist ein aktives Verschwenken der Messereinheit zum Zweck der Wartung möglich, sodass ein manueller Zugriff beispielsweise auf die Gegenmesser oder zur Auflösung einer Verstopfung möglich ist. Das aktive Verschwenken kann beispielsweise mittels eines Antriebs erfolgen, beispielsweise mittels eines Hydraulikzylinders. Zwecks manuellen Zugriffs auf die Gegenmesser wird zunächst der Messertragrahmen mittels des Gleitrahmens quer zur übrigen Ballenpresse aus letzterer herausbewegt.

Das Häckselorgan ist gemäß der beschriebenen vorteilhaften Ausgestaltung folglich gewissermaßen "an der Front öffenbar". Im Unterschied dazu ist es im Stand der Technik üblich, dass der Häckselrotor "an seiner Rückseite öffenbar" ist. Hierbei ist die Schwenkachse, um die die Messereinheit und ggf. der Gutförderboden verschwenkbar ist, in Gutflussrichtung betrachtet vor dem Häckselrotor bzw. dessen Rotationsachse angeordnet.

In der Praxis hat sich gezeigt, dass die Auflösung eines Staus von Erntegut in dem Häckselorgan vorteilhaft von dem vorderen Bereich des Häckselorgans aus beseitigt wird. Bei einer Zugriffsmöglichkeit von dem vorderen Bereich fällt insbesondere nicht in demselben Maße Erntegut aus dem Häckselorgan auf den Untergrund, das nach Aufhebung des Staus erneut aufgesammelt werden müsste. Dadurch, dass die Messereinheit und/oder der Gutförderboden in diesem vorderen Bereich des Häckselorgans also absenkbar ist beziehungsweise sind, kann ein derartiger Stau besonders effizient behoben werden. Anschließend ist es möglich, die Messereinheit und/oder den Gutförderboden wieder hochzuschwenken, sodass die Ballenpresse den regelmäßigen Betrieb fortsetzen kann.

In einer weiteren besonders vorteilhaften Ausgestaltung ist die Ballenpresse gekennzeichnet durch einen Antrieb, insbesondere in Form eines Hydraulikzylinders, mittels dessen die Verschwenkung zumindest der Messereinheit zumindest um die Rückschwenkachse antreibbar ist. Hierdurch ergeben sich mehrere Vorteile. Einerseits kann die Verschwenkung mittels des Antriebs besonders präzise erfolgen. Mit anderen Worten ist es mittels des Antriebs möglich, die Verschwenkung der Messereinheit und/oder des Gutförderbodens gerade so weit durchzuführen, wie es für den unmittelbaren Anwendungsfall, beispielsweise ein Wechseln der Gegenmesser oder ein Beheben eines Staus, nötig ist. Andererseits kann die Verschwenkung gegenüber einer manuellen Bedienung mittels des Antriebs besonders schnell durchgeführt werden. In der Praxis haben sich Hydraulikzylinder als besonders robust und belastbar erwiesen, weshalb diese besonders bevorzugt einsetzbar sind. Durch die derartige Ausgestaltung ergibt sich der Vorteil, dass die Ballenpresse besonders zuverlässig und schnell und außerdem wartungsarm betrieben werden kann.

Ein weiterer Vorteil ergibt sich dann, wenn eine Schwenkeinheit vorgesehen ist, die zumindest die Messereinheit und eine Messerverriegelungseinheit umfasst und die bei Vorliegen in einer um die Rückschwenkachse heruntergeschwenkten Zwischenposition an dem Gehäuse der Ballenpresse arretierbar ist, sodass eine weitergehende Verschwenkung zumindest der Messerverriegelungseinheit gegenüber dem Gehäuse blockiert ist. Die Arretierbarkeit ist insbesondere dann von Interesse, wenn eine Wartung des Häckselorgans vorgenommen werden soll, sei es wegen einer Verstopfung bzw. eines Staus oder eines Wechsels von Gegenmessern. Typischerweise wird die Messereinheit aktiv in die Zwischenposition abgesenkt, bevor die Messerverriegelungseinheit an dem Gehäuse arretiert wird. Hierbei wird die Schwenkeinheit um die Rückschwenkachse in die Zwischenposition verschwenkt. Das Häckselorgan ist bei Vorliegen der Schwenkeinheit in der Zwischenposition in seinem vorderen Bereich offen, wie oben erläutert ist. Um zumindest die Messerverriegelungseinheit in dieser Zwischenposition zu halten, insbesondere zu sichern, kann die Schwenkeinheit an dem Gehäuse arretiert werden, vorzugsweise unter Ausbildung eines Formschlusses. Die Schwenkeinheit kann dazu beispielsweise mittels einer Aussparung an einem an dem Gehäuse angeordneten Stift einrasten. Auf diese Weise ist die Schwenkeinheit in der entsprechenden Zwischenposition arretiert. Hierdurch ergibt sich der Vorteil, dass die Schwenkeinheit in der Zwischenposition besonders einfach von dem vorderen Bereich des Häckselorgans aus zugänglich ist, sodass beispielsweise Verstopfungen aufgehoben werden können.

Gemäß einer weiteren besonders vorteilhaften Ausgestaltung ist vorgesehen, dass zumindest die Messereinheit, vorzugsweise ausgehend von der Zwischenposition der Schwenkeinheit, unabhängig von der Messerverriegelungseinheit um eine sich quer zu der Ballenpresse erstreckende Frontschwenkachse in eine Wartungsposition verschwenkbar ist. Die Frontschwenkachse ist hierbei - in Gutflussrichtung betrachtet - in einem Bereich vor dem Häckselrotor angeordnet ist. Mit anderen Worten ist die Frontschwenkachse vor dem Häckselrotor bzw. dessen Rotationsachse angeordnet, sodass die Messereinheit dementsprechend hinter dem Häckselrotor verschwenkbar ist. Auf diese Weise kann der Abstand zwischen der Messereinheit und dem Häckselrotor einem hinteren Bereich des Häckselorgans verändert, mithin vergrößert beziehungsweise verkleinert werden. Insbesondere ist die Messereinheit dazu eingerichtet, so weit nach unten zu schwenken, dass der Messertragrahmen seitlich frei ist und mithilfe des Gleitrahmens translatorisch seitlich bzw. in die Querrichtung der Ballenpresse aus der übrigen Ballenpresse heraus bewegbar ist. Auf diese Weise kann ein besonders einfacher Zugriff auf die in dem Messertragrahmen gelagerten Gegenmesser erfolgen, um diese zu wechseln oder auf sonstige Weise zu warten.

Ferner ist die Ballenpresse dann besonders vorteilhaft ausgestaltet, wenn der Messertragrahmen bei Vorliegen der Messereinheit in der Wartungsposition mittels des Gleitrahmens translatorisch in die Querrichtung der Ballenpresse aus der übrigen Ballenpresse heraus bewegbar ist. Mit anderen Worten kann die Messereinheit nicht nur nach unten, insbesondere relativ zu dem Gehäuse, verschwenkt werden, sondern zusätzlich seitlich aus der Ballenpresse herausbewegt werden. Die sich hierdurch ergebenden Vorteile sind vorstehend bereits dargelegt.

In einer weiteren besonders vorteilhaften Ausgestaltung der Ballenpresse ist diese gekennzeichnet durch mindestens eine Verbindungseinheit, mittels der die Messereinheit an dem Gehäuse der Ballenpresse derart arretierbar sind, dass die Messereinheit, vorzugsweise unabhängig von dem Gutförderboden, um die Frontschwenkachse in die Wartungsposition verschwenkbar ist. Bei dieser Ausgestaltung kann die Messereinheit in die Wartungsposition verschwenkt werden, indem sie um die Frontschwenkachse verschwenkt wird. Die Messereinheit kann auf diese Weise besonders einfach derart freigelegt werden, dass die Bewegung des Messertragrahmens in Querrichtung der Ballenpresse aus der übrigen Ballenpresse heraus besonders einfach möglich ist, insbesondere ohne Kollision mit anderen Bauteilen der Ballenpresse.

Ein weiterer Vorteil ergibt sich dann, wenn die Ballenpresse ein Verriegelungsmittel aufweist, mittels dessen die Messereinheit gegen die Verschwenkung um die Frontschwenkachse verriegelbar oder verriegelt ist, vorzugsweise mittels einer Verriegelung der Messereinheit an dem Gutförderboden und/oder dem Gehäuse der Ballenpresse. Hierbei ist vorzugsweise das Verriegelungsmittel zerstörungsfrei lösbar, sodass die Verriegelung der Messereinheit wechselweise herstellbar und auflösbar ist. Um die Messereinheit nach unten zu verschwenken, ist es somit notwendig, vorab das Verriegelungselement zu lösen. Demzufolge kann ein unerwünschtes Verschwenken verhindert werden, wodurch sich der Vorteil ergibt, dass die Ballenpresse besonders sicher und zuverlässig betrieben werden kann.

Von der Verfahrensweise her kann es besonders vorteilhaft sein, ausgehend von einer Arbeitsposition der Schwenkeinheit, die selbige während eines bestimmungsgemäßen Betriebs der Ballenpresse einnimmt, selbige zunächst inklusive des Gutförderbodens um die Rückschwenkachse mittels eines Antriebs aktiv in die Zwischenposition nach unten zu verschwenken. Das Häckselorgan ist daraufhin in seinem vorderen Bereich offen. In dieser Zwischenposition ist die Aufhebung eines Staus bzw. einer Verstopfung des Häckselorgans besonders einfach möglich. Sofern die Gegenmesser gewartet oder gewechselt werden sollen, wird die Messerverriegelungseinheit sodann an dem Gehäuse der Ballenpresse verriegelt, woraufhin die Messereinheit zusammen mit dem Gutförderboden mittels des Antriebs aktiv wieder um die Rückschwenkachse hochgeschwenkt wird, bis eine Vorposition erreicht ist. In dieser Vorposition wird die Messereinheit mittels der Verbindungseinheit derart mit dem Gehäuse der Ballenpresse verbunden, dass sie mit der Frontschwenkachse gekoppelt ist. Weiterhin wird die Verbindung der Messereinheit mit dem Gutförderboden gelöst, vorzugsweise gleichzeitig zur Lösung der Verbindungseinheit zwecks Aufhebung der Verbindung zwischen Messereinheit und Gehäuse der Ballenpresse. Um die Messereinheit schließlich um diese Frontschwenkachse in die Wartungsposition zu verschwenken, wird zunächst noch das Verriegelungsmittel gelöst, das die Messereinheit derart gegen das Gehäuse der Ballenpresse verriegelt, dass die Verschwenkung um die Frontschwenkachse blockiert ist. Die Lösung des Verriegelungsmittels kann vorzugsweise erst dann erfolgen, wenn das Verbindungmittel aktiviert ist und die Koppelung der Messereinheit mit der Frontschwenkachse herbeigeführt hat. Schließlich wird die Messereinheit um die Frontschwenkachse in ihre Wartungsposition verschwenkt, von der ausgehend der Messertragrahmen mittels des Gleitrahmens translatorisch in Querrichtung der Ballenpresse aus seliger heraus bewegbar ist.

Die Erfindung ist nachstehend anhand eines Ausführungsbeispiels, das in den Figuren dargestellt ist, näher erläutert. Es zeigt:
- Fig. 1:: eine schematische Seitenansicht einer erfindungsgemäßen landwirtschaftlichen Ballenpresse;
- Fig. 2:: eine schematische Seitenansicht einer Messereinheit;
- Fig. 3:: eine weitere schematische Seitenansicht der Messereinheit;
- Fig. 4:: eine weitere schematische Seitenansicht der Messereinheit;
- Fig. 5:: eine weitere schematische Seitenansicht der Messereinheit;
- Fig. 6:: eine weitere schematische Seitenansicht der Messereinheit;
- Fig. 7:: eine schematische Detailansicht einer Verriegelungseinheit;
- Fig. 8:: eine schematische Perspektivansicht der Messereinheit; und
- Fig. 9:: eine schematische Perspektivansicht der Messereinheit in einer Wartungsposition.

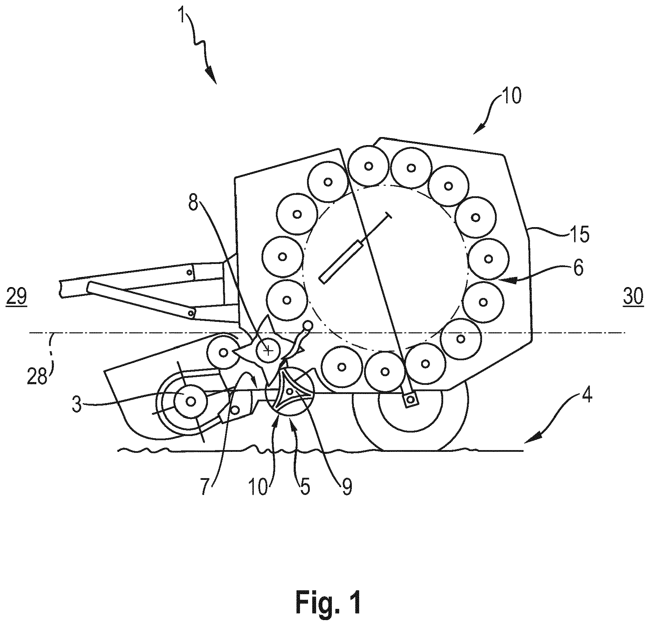

**Figur 1** zeigt in einer schematischen Seitenansicht eine erfindungsgemäße landwirtschaftliche Ballenpresse **1**. Die Ballenpresse **1** ist vorliegend eine Rundballenpresse und zur Herstellung von zumindest im Wesentlichen zylinderförmigen Erntegutballen aus halmartigem Erntegut **2** ausgebildet.

Die Ballenpresse **1** umfasst ein Aufnahmeorgan **3** zur Aufnahme von Erntegut **2** von einem Untergrund **4**. Aus Gründen der Übersichtlichkeit ist das Erntegut **2** in **Figur 1** nicht dargestellt. Bei dem Untergrund **4** kann es sich beispielsweise um ein zu bestellendes Feld handeln, auf dem das Erntegut **2** aufliegt. Bei dem Erntegut **2** kann es sich insbesondere um abgeschnittenes Stroh oder Heu handeln. Die Ballenpresse **1** umfasst außerdem ein Häckselorgan **5** zur Zerkleinerung des Ernteguts **2** und ein Verdichtungsorgan **6** zur Verdichtung des zerkleinerten Ernteguts **2** zu einem Erntegutballen. Mit anderen Worten wird das auf dem Untergrund **4** aufliegende Erntegut **2** mittels des Aufnahmeorgans **3**, das auch als Pick-up bezeichnet wird, aufgenommen. Sodann wird das Erntegut **2** mittels des Häckselorgans **5** zerkleinert und anschließend im Verdichtungsorgan **6** zu einem Erntegutballen verdichtet. Abschließend wird dieser von der Ballenpresse **1** auf den Untergrund **4** abgelassen.

Das Häckselorgan **5** weist vorliegend einen Gutförderboden **7**, einen um eine Rotationsachse drehantreibbaren Häckselrotor **8** sowie eine Vielzahl von zumindest zum Teil über den Gutförderboden **7** hinaus vorstehenden Gegenmessern **9** auf. Der Häckselrotor **8** und die Gegenmesser **9** können derart miteinander in Eingriff geraten, dass mittels des Häckselrotors **8** erfasstes Erntegut **2** an den Gegenmessern **9** abgeschnitten wird. Dadurch, dass der Häckselrotor **8** kontinuierlich rotiert, wird folglich kontinuierlich Erntegut **2** durch ein Zusammenspiel des Häckselrotors **8** und der Gegenmesser **9** verarbeitet.

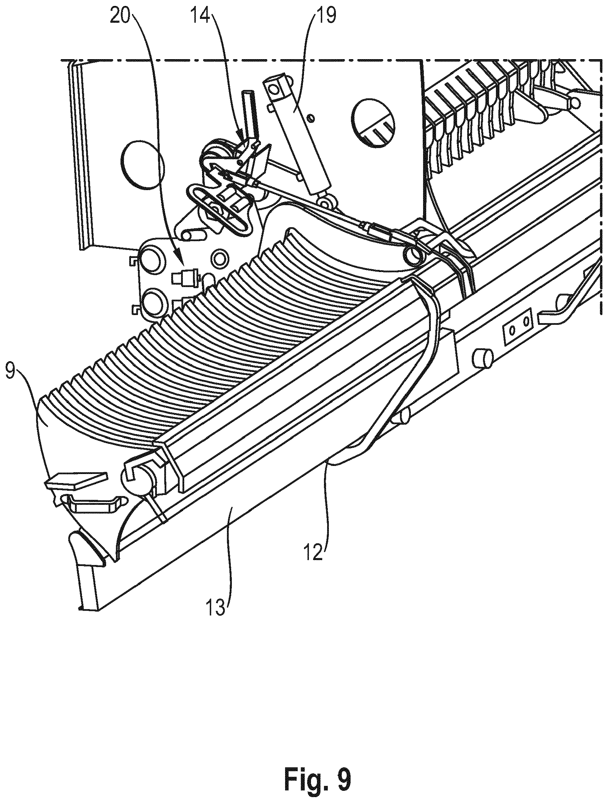

Wie in **Figur 9** erkennbar ist, weist das Häckselorgan **5** eine Messereinheit **10** auf, die einen die Gegenmesser **9** tragenden Messertragrahmen **11** und einen mit Gleitschienen **12** ausgestatteten Gleitrahmen **13** umfasst. Vorliegend sind die Gegenmesser 9 somit zumindest im Wesentlichen parallel zueinander und - betrachtet in deren Längsrichtung - parallel zu einer Fahrzeuglängsrichtung **28** der Ballenpresse **1** angeordnet. Mittels des Gleitrahmens **13** ist es möglich, den Messertragrahmen **11** - in Fahrzeuglängsrichtung **28** betrachtet - quer zur Ballenpresse **1** beziehungsweise seitlich herauszufahren. Dies ist in **Figur 9** dargestellt. In dieser Position ist der Messertragrahmen **11** besonders einfach zugänglich, sodass die daran befindlichen Gegenmesser **9** gewartet beziehungsweise ausgetauscht werden können.

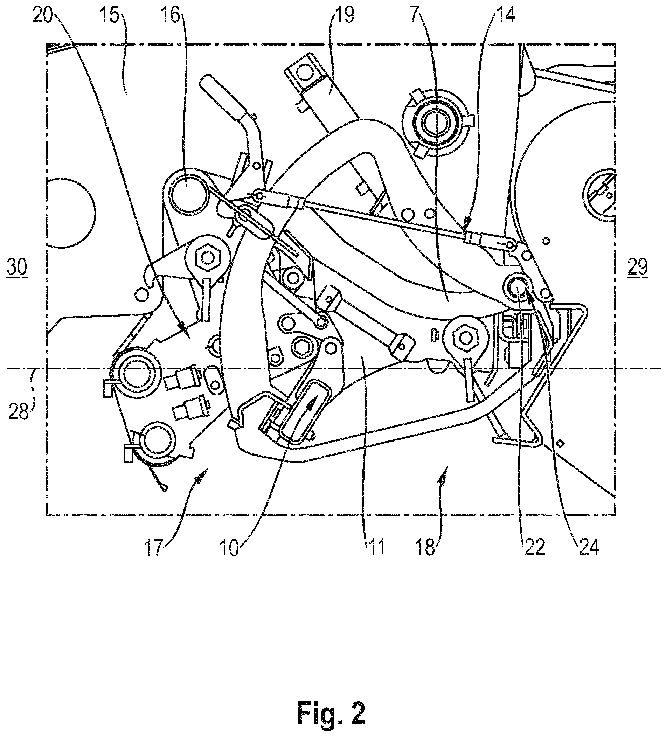

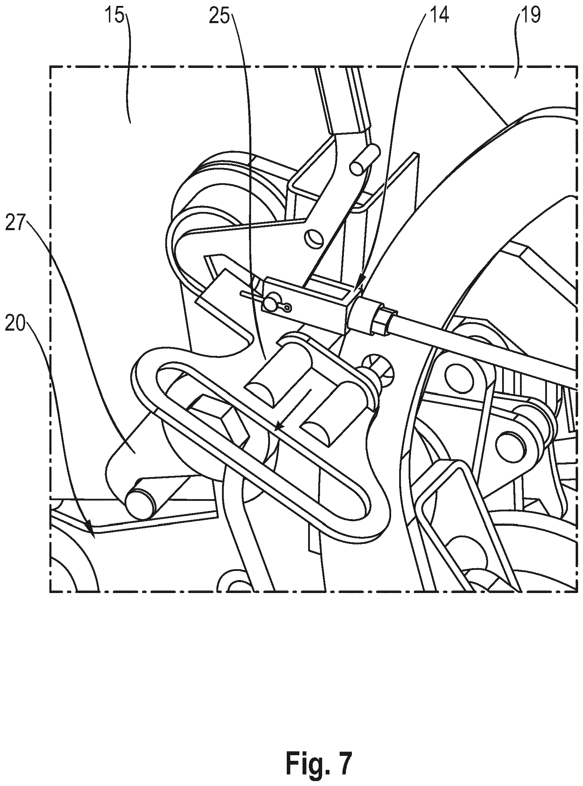

Mittels der erfindungsgemäßen Ballenpresse **1** ist es demzufolge möglich, den Messertragrahmen **11** von einer regelmäßigen Arbeitsposition während eines regelmäßigen Betriebs der Ballenpresse **1**, die beispielsweise in **Figur 2** dargestellt ist, insbesondere in die Position, die in **Figur 9** dargestellt ist, zu bringen beziehungsweise umgekehrt. Der Messertragrahmen **11** kann folglich schubladenartig aus der Ballenpresse **1** herausgezogen beziehungsweise hineingeschoben werden. Dieser Bewegungsablauf ist in den **Figuren 2 bis 9** dargestellt.

Betrachtet in Fahrzeuglängsrichtung **28** weist die Ballenpresse **1** eine Frontschwenkachse **22** und eine Rückschwenkachse **16** auf. Hierbei befindet sich die Frontschwenkachse **22** in Fahrzeuglängsrichtung **28** betrachtet räumlich vor der Rückschwenkachse **16**, wobei sich in den **Figuren 2 bis 9** ein vorderes Ende **29** der Ballenpresse **1** entgegen der Darstellung in **Figur 1** rechts und ein hinteres Ende **30** links bezogen auf die Darstellung befinden. Außerdem ist - in Gutflussrichtung des Ernteguts **2** betrachtet - die Frontschwenkachse **22** in einem vorderen Bereich **18** des Häckselorgans **5** vor dem Häckselrotor **8** und die Rückschwenkachse **16** in einem hinteren Bereich **17** des Häckselorgans **5** hinter dem Häckselrotor **8** angeordnet. Dies ist beispielsweise in **Figur 2** erkennbar. Demzufolge ist die Messereinheit **10** einerseits um die Frontschwenkachse **22** und andererseits um die Rückschwenkachse **16** verschwenkbar.

Ein Verschwenken der Messereinheit **10** um die Frontschwenkachse **22** ermöglicht, dass die Messereinheit **10** in dem hinteren Bereich **17** abgesenkt beziehungsweise angehoben werden kann. Entsprechend ermöglicht ein Verschwenken der Messereinheit **10** um die Rückschwenkachse **16**, dass die Messereinheit **10** in dem vorderen Bereich **18** abgesenkt beziehungsweise angehoben werden kann, was vorliegend in Zusammenschau der **Figuren 2 bis 6** erkennbar ist.

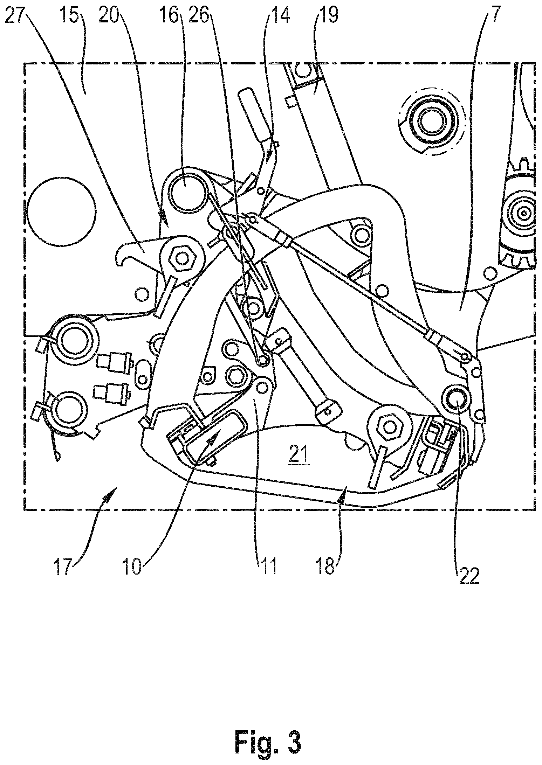

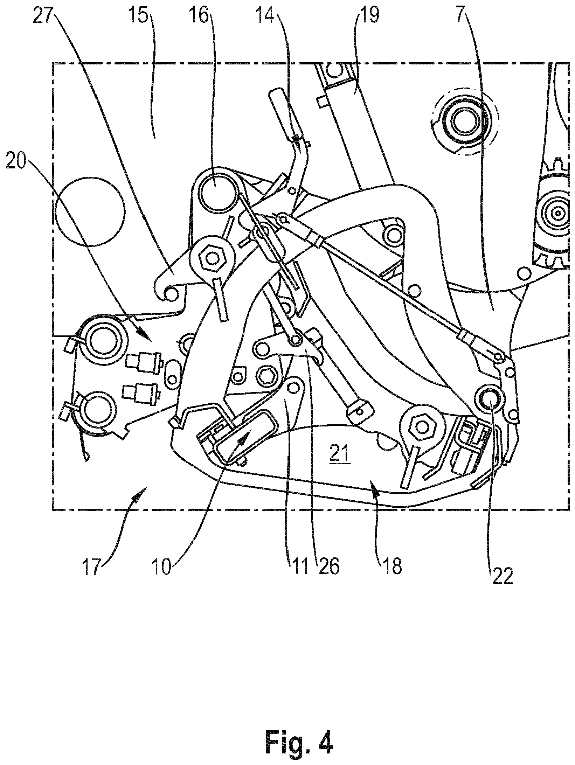

Ausgehend von einer Arbeitsposition, die die Messereinheit **10** für eine bestimmungsgemäße Verwendung der Messereinheit **10** einnimmt, wird hierbei in dem gezeigten Beispiel eine Schwenkeinheit, die in dem gezeigten Beispiel die Messereinheit **10**, den Gutförderboden **7** und eine Messerverriegelungseinheit **20** umfasst, zunächst um die Rückschwenkachse **16** derart nach unten verschwenkt, dass die Messereinheit **10** in dem vorderen Bereich **18** abgeklappt, also nach unten verschwenkt, wird. Dafür wird die Schwenkeinheit aktiv mittels eines Antriebs **19** zumindest im Wesentlichen vollständig nach unten verschwenkt. Der Antrieb **19** ist vorliegend ein Hydraulikzylinder. Die Schwenkeinheit liegt nunmehr in einer Zwischenposition **21** vor. In dieser wird sie mittels eines Verriegelungsmittels **27** gegen ein Gehäuse **15** der Ballenpresse **1** derart verriegelt, dass die Messerverriegelungseinheit **20** an dem Gehäuse **15** arretiert ist. Das Verriegelungsmittel **27** ist hierbei mechanisch mit einem Koppelungsmittel **26** verbunden, das die Messerverriegelungseinheit **20** mit der Messereinheit **10** und dem Gutförderboden **7** koppelt. Die Überführung des Verriegelungsmittels **27** in eine Stellung, die die Arretierung der Messerverriegelungseinheit **20** an dem Gehäuse **15** der Ballenpresse **1** bewirkt, führt aufgrund der mechanischen Kopplung automatisch dazu, dass das Koppelungsmittel **26** gelöst wird, sodass die Messereinheit **10** und der Gutförderboden **7** fortan gemeinsam relativ zu der Messerverriegelungseinheit **20** bewegbar sind. Mithin wird Im weiteren Verlauf der Bewegung wird die Messereinheit **10** zusammen mit dem Gutförderboden **7** mittels Lösens von der Messerverriegelungseinheit **20** freigegeben. Die Zwischenposition **21** der Schwenkeinheit, in dem die Messereinheit **10** noch an der Messerverriegelungseinheit **20** verriegelt ist, ist beispielsweise in **Figur 3** dargestellt. In Zusammenschau der **Figur 3** mit der **Figur 4** wird deutlich, dass durch Lösen des Kopplungsmittels **26** die Messereinheit **10** und der Gutförderboden **7** freigegeben wird beziehungsweise ist. Mit anderen Worten ist die Messereinheit **10** gemäß **Figur 3** verriegelt und gemäß **Figur 4** nicht verriegelt beziehungsweise freigegeben.

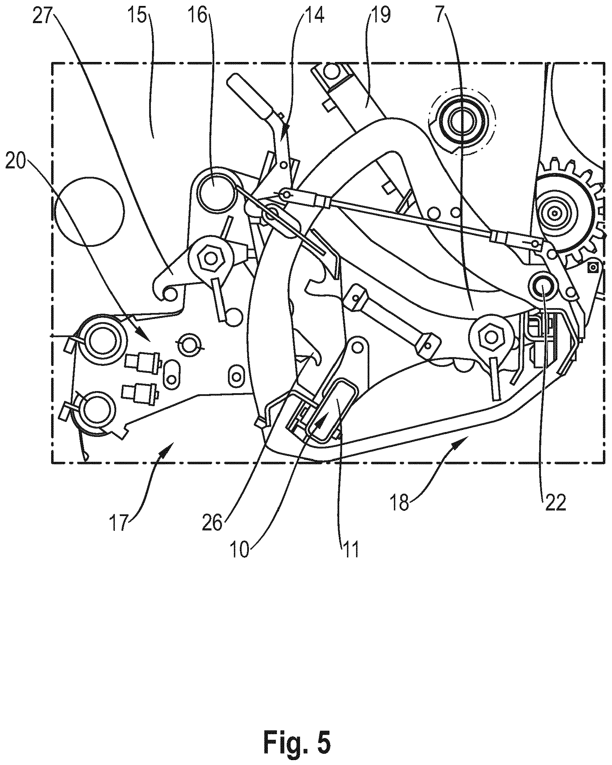

Nach Lösen des Kopplungsmittels **26** wird die Messereinheit **10** mitsamt dem Gutförderboden **7** mittels des Antriebs **19** aktiv angehoben, sodass die Messereinheit **10** und der Gutförderboden **7** um die Rückschwenkachse **16** nach oben verschwenkt bis in eine Vorposition bewegt werden. Die Messerverriegelungseinheit **20** wird nicht mitgeschwenkt, da sie an dem Gehäuse **15** arretiert ist. In der Vorposition ist der Gutförderboden **7** zumindest teilweise in Kontakt mit dem Gehäuse **15** und ist zumindest im Wesentlichen entsprechend seiner regelmäßigen Arbeitsposition angeordnet. Mit anderen Worten unterscheidet sich die nun vorliegende Position des Gutförderbodens **7** - gemäß **Figur 5** - zumindest nicht wesentlich, vorzugsweise gar nicht, von einer solchen, die er während des regelmäßigen Betriebes der Ballenpresse **1** einnimmt- gemäß **Figur 2**. Die Messerverriegelungseinheit **20** hat sich nicht bewegt, da diese mittlerweile mittels des Verriegelungsmittels **27** an dem Gehäuse **15** arretiert ist. Dies ist in Zusammenschau der **Figuren 4** **und** **5** erkennbar.

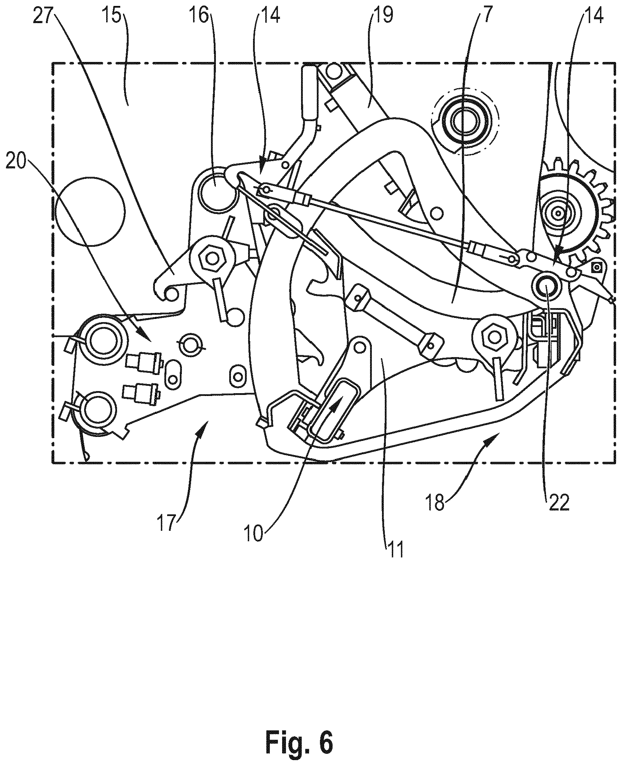

Durch Betätigen einer Verbindungseinheit **14** wird der Gutförderboden **7** an dem Gehäuse **15** befestigt. Gleichzeitig wird die Messereinheit **10** an dem Gehäuse **15** befestigt. Dies ist in **Figur 6** dargestellt. Zur Befestigung des Gutförderbodens **7** umfasst die Verbindungseinheit **14** eine Befestigungseinrichtung **24**, bei der es sich vorliegend um einen Haken handelt, der in der **Figur 6** nicht erkennbar, da verdeckt, ist, aber in etwa im Bereich der Frontschwenkachse **22** angeordnet ist.

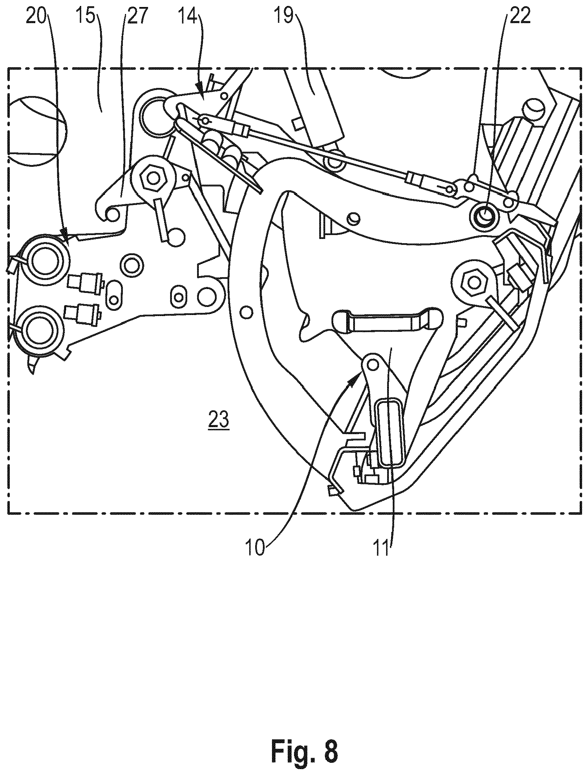

Durch Betätigen eines Verriegelungsmittels **25** kann der Gutförderboden **7** von der Messereinheit **10** gelöst werden. Hierdurch wird die Messereinheit **10** folglich freigegeben, sodass letztere sich fortan weiter um die Frontschwenkachse **22** verschwenken lässt. Dies wird mittels des Antriebs **19** bewerkstelligt und ist in **Figur 8** dargestellt. Hierbei ist erkennbar, dass die Messereinheit **10** zumindest im Wesentlichen vollständig nach unten in ihre Wartungsposition verschwenkt ist. In dieser Wartungsposition ist der Messertragrahmen **11** in dem Gleitrahmen **13** zum Herausziehen in Querrichtung der Ballenpresse **1** vollständig freigegeben. Mittels Herausziehens des Messertragrahmens **11** mittels des Gleitrahmens **13** aus der übrigen Ballenpresse **1** heraus kann der Messertragrahmen **11** in die in **Figur 9** dargestellte Position überführt werden. Wie in dieser **Figur 9** erkennbar ist, ist der Messertragrahmen **11** und somit die darin gelagerten Gegenmesser **9** für Wartungsarbeiten zugänglich, insbesondere zum Tausch verschlissener Gegenmesser **9** gegen neue Gegenmesser.

### Bezugszeichenliste

- 1: Ballenpresse
- 2: Erntegut
- 3: Aufnahmeorgan
- 4: Untergrund
- 5: Häckselorgan
- 6: Verdichtungsorgan
- 7: Gutförderboden
- 8: Häckselrotor
- 9: Gegenmesser
- 10: Messereinheit
- 11: Messertragrahmen
- 12: Gleitschiene
- 13: Gleitrahmen
- 14: Verbindungseinheit
- 15: Gehäuse
- 16: Rückschwenkachse
- 17: hinterer Bereich
- 18: vorderer Bereich
- 19: Antrieb
- 20: Messerverriegelungseinheit
- 21: Zwischenposition
- 22: Frontschwenkachse
- 23: Wartungsposition
- 24: Befestigungseinrichtung
- 25: Verriegelungsmittel
- 26: Kopplungsmittel
- 27: Verriegelungsmittel
- 28: Fahrzeugslängsrichtung
- 29: Ende
- 30: Ende

## Patentansprüche

1. Landwirtschaftliche Ballenpresse (1), insbesondere in Form einer Rundballenpresse (1), zur Herstellung von Erntegutballen aus halmartigem Erntegut (2), umfassend
- ein Aufnahmeorgan (3) zur Aufnahme von Erntegut (2) von einem Untergrund (4),
- ein Häckselorgan (5) zur Zerkleinerung des Ernteguts (2),
- ein Verdichtungsorgan (6) zur Verdichtung des zerkleinerten Ernteguts (2) zu einem Erntegutballen,
wobei das Häckselorgan (5) einen Gutförderboden (7), einen drehantreibbaren Häckselrotor (8) sowie eine Vielzahl von zumindest zum Teil über den Gutförderboden (7) hinaus vorstehenden Gegenmessern (9) aufweist,
wobei das aufgenommene Erntegut in eine Gutflussrichtung durch das Häckselorgan (5) zu dem Verdichtungsorgan (6) förderbar ist,
**dadurch gekennzeichnet, dass**
das Häckselorgan (5) eine Messereinheit (10) aufweist, die einen die Gegenmesser (9) tragenden Messertragrahmen (11) und einen mit Gleitschienen (12) ausgestatteten Gleitrahmen (13) umfasst,
wobei der Messertragrahmen (11) derart an dem Gleitrahmen (13) gelagert ist, dass der Messertragrahmen (11) mittels der Gleitschienen (12) des Gleitrahmens (13) in eine Querrichtung der Ballenpresse (1) gerichtet translatorisch aus der übrigen Ballenpresse (1) heraus bewegbar ist,
wobei die Messereinheit (10) unterhalb des Gutförderbodens (7) positioniert und der Messertragrahmen (11) und der Gleitrahmen (13) mittels eines Verriegelungselements (14) miteinander verbindbar oder verbunden sind.

2. Ballenpresse (1) nach Anspruch 1, **dadurch gekennzeichnet, dass** die Messereinheit (10), vorzugsweise gemeinsam mit dem Gutförderboden (7), gegenüber einem Gehäuse (15) der Ballenpresse (1) um eine sich quer zu der Ballenpresse (1) erstreckende Rückschwenkachse (16) verschwenkbar ist, die - in Gutflussrichtung betrachtet - in einem Bereich (17) hinter dem Häckselrotor (8) angeordnet ist, sodass die Messereinheit (10) in einem Bereich (18) vor dem Häckselrotor (8) abgesenkt ist.

3. Ballenpresse (1) nach Anspruch 2, **gekennzeichnet durch** einen Antrieb (19), insbesondere in Form eines Hydraulikzylinders, mittels dessen eine Verschwenkung um die Rückschwenkachse (16) antreibbar ist.

4. Ballenpresse (1) nach einem der Ansprüche 2 oder 3, **dadurch gekennzeichnet, dass** eine Schwenkeinheit, die zumindest die Messereinheit (10) und eine Messerverriegelungseinheit (20) umfasst, bei Vorliegen in einer um die Rückschwenkachse (16) heruntergeschwenkten Zwischenposition (21) an dem Gehäuse (15) der Ballenpresse (1) arretierbar ist, sodass eine weitergehende Verschwenkung zumindest der Messerverriegelungseinheit (20) gegenüber dem Gehäuse (15) blockiert ist.

5. Ballenpresse (1) nach Anspruch 4, **dadurch gekennzeichnet, dass** zumindest die Messereinheit (10) unabhängig von der Messerverriegelungseinheit (20) um eine sich quer zu der Ballenpresse (1) erstreckende Frontschwenkachse (22) in eine Wartungsposition (23) verschwenkbar ist, die - in Gutflussrichtung betrachtet - in einem Bereich (18) vor dem Häckselrotor (8) angeordnet ist.

6. Ballenpresse nach Anspruch 5, **dadurch gekennzeichnet, dass** der Messertragrahmen (11) bei Vorliegen der Messereinheit (10) in der Wartungsposition (23) mittels des Gleitrahmens (13) translatorisch in die Querrichtung der Ballenpresse (1) aus der übrigen Ballenpresse (1) heraus bewegbar ist.

7. Ballenpresse (1) nach einem der Ansprüche 6 oder 7, **gekennzeichnet durch** mindestens eine Verbindungseinheit, mittels der die Messereinheit (10) an dem Gehäuse (15) der Ballenpresse (1) derart arretierbar sind, dass die Messereinheit (10) unabhängig von dem Gutförderboden (7) um die Frontschwenkachse (22) in die Wartungsposition verschwenkbar ist.

8. Ballenpresse (1) nach einem der Ansprüche 5 bis 7, **gekennzeichnet durch** ein Verriegelungsmittel (25), mittels dessen die Messereinheit (10) gegen die Verschwenkung um die Frontschwenkachse (22) verriegelbar oder verriegelt ist, vorzugsweise mittels einer Verriegelung der Messereinheit (10) an dem Gutförderboden (7), wobei vorzugsweise das Verriegelungsmittel (25) zerstörungsfrei lösbar ist, sodass die Verriegelung der Messereinheit (10) wechselweise herstellbar und auflösbar ist.
